# EUROPEAN PATENT APPLICATION

(11) **EP 3 530 767 A1**
(43) Date of publication of application: **28.08.2019**
(21) Application number: 17861577.9
(22) Date of filing: 10.10.2017
(51) Int. Cl.: C22C 26/00, C22C 1/05, B22F 7/00

(54) **COMPOSITE SINTERED MATERIAL**

(30) Priority: 21.10.2016 JP 2016206903
(71) Applicant: Sumitomo Electric Industries, Ltd., Osaka-shi, Osaka 541-0041 (JP); Sumitomo Electric Hardmetal Corp., Itami-shi, Hyogo 664-0016 (JP)
(72) Inventor: OKAMURA, Katsumi, Itami-shi Hyogo 664-0016 (JP); WATANOBE, Naoki, Itami-shi Hyogo 664-0016 (JP); ISHII, Akito, Itami-shi Hyogo 664-0016 (JP); HARADA, Takashi, Itami-shi Hyogo 664-0016 (JP); KUKINO, Satoru, Itami-shi Hyogo 664-0016 (JP); HIGASHI, Taisuke, Itami-shi Hyogo 664-0016 (JP)
(74) Representative: Boult Wade Tennant LLP
(86) International application number: PCT/JP2017/036588
(87) International publication number: WO 2018/074275

(57) **Abstract**

A composite sintered material includes: a plurality of diamond grains having an average grain size of less than or equal to 10 µm; a plurality of cubic boron nitride grains having an average grain size of less than or equal to 2 µm; and a remainder of a binder phase, wherein at least parts of adjacent diamond grains are bound to one another, the binder phase includes cobalt, in the composite sintered material, a content of the diamond grains is more than or equal to 30 volume % and less than or equal to 94 volume %, a content of the cubic boron nitride grains is more than or equal to 3 volume % and less than or equal to 40 volume %, and a content of the cobalt is more than or equal to 3 volume % and less than or equal to 30 volume %.

## Description

### TECHNICAL FIELD

The present invention relates to a composite sintered material. The present application claims a priority based on Japanese Patent Application No. 2016-206903 filed on October 21, 2016, the entire content of which is incorporated herein by reference.

### BACKGROUND ART

Japanese Patent Laying-Open No. 2005-239472 (Patent Literature 1) discloses a high-strength and high-wear-resistance diamond sintered material including: sintered diamond grains having an average grain size of less than or equal to 2 µm; and a remainder of a binder phase, wherein a content of the sintered diamond grains in the diamond sintered material is more than or equal to 80 volume % and less than or equal to 98 volume %, the binder phase includes cobalt and at least one element selected from a group consisting of titanium, zirconium, hafnium, vanadium, niobium, tantalum, chromium, and molybdenum, a content of the at least one element in the binder phase being more than or equal to 0.5 mass % and less than 50 mass %, a content of the cobalt in the binder phase being more than or equal to 50 mass % and less than 99.5 mass %, a part or whole of the at least one element selected from the group consisting of titanium, zirconium, hafnium, vanadium, niobium, tantalum, chromium, and molybdenum is present as carbide grains having an average grain size of less than or equal to 0.8 µm, a carbide grain structure is discontinuous, and adjacent sintered diamond grains are bound to one another.

Japanese Patent Laying-Open No. 9-316587 (Patent Literature 2) discloses a high-strength fine-grain diamond sintered material including: sintered diamond grains; and a remainder of a binder, wherein each of the sintered diamond grains has a grain size falling within a range of 0.1 to 4 µm, the binder includes at least one iron group metal selected from a group consisting of Fe, Co, and Ni, and an oxygen content falls within a range of 0.01 to 0.08 weight %.

Japanese Patent Laying-Open No. 1-17836 (Patent Literature 3) discloses a diamond sintered material constituted of a sintered material obtained by sintering diamond raw material powder particles under a ultra-high pressure and a high temperature, each of the diamond raw material powder particles being uniformly coated with 6 to 0.1 volume % of a group 4a, 5a, or 6a transition metal in the periodic table, boron, or silicon, wherein the diamond sintered material contains 94 to 99.8 volume % of diamond and a remainder of a carbide of the coating material.

Japanese National Patent Publication No. 2014-531967 (Patent Literature 4) discloses a polycrystalline diamond compact comprising: a polycrystalline diamond body comprising a material microstructure comprising a plurality of bonded-together, diamond grains and interstitial regions between the diamond grains; a substrate comprising tungsten and a catalyst metal; and a grain growth inhibitor layer between the polycrystalline diamond body and the substrate, the grain growth inhibitor layer comprising a plurality of titanium-containing particles interspersed with tungsten and the catalyst metal, wherein the titanium-containing particles are less than 800 nanometers in size, wherein the grain growth inhibitor layer is bonded to the substrate and to the polycrystalline diamond body at opposite sides, and is about 20-100 microns in thickness, and wherein the diamond grains have an average size of about 1 micron or less.

WO 2007/039955 (Patent Literature 5) discloses a cBN sintered body for high surface integrity machining, comprising not less than 60% and not more than 95% of cBN (cubic boron nitride) component in volume %, having a thermal conductivity of 70 W·m⁻¹·K⁻¹ or more, and an outermost surface of the cBN sintered body being coated with a heat resistant film having a thickness of 0.5 to 12 µm and comprising a compound of at least one element selected from 4a, 5a, 6a group elements and Al, and at least one element selected from C, N and O.

WO 2005/066381 (Patent Literature 6) discloses a cubic boron nitride sintered body, which contains cubic boron nitride particles and a bonding material used for bonding the cBN particles to one another, comprising: cBN particles in a range from 70 vol % to 98 vol %; and a residual bonding material constituted by a Co compound, an Al compound and WC and a solid solution of these, wherein the cBN particles in the sintered body contain 0.03 wt % or less of Mg and 0.001 wt % or more to 0.05 wt % or less of Li.

### CITATION LIST

### PATENT LITERATURE

PTL 1: Japanese Patent Laying-Open No. 2005-239472
PTL 2: Japanese Patent Laying-Open No. 9-316587
PTL 3: Japanese Patent Laying-Open No. 1-17836
PTL 4: Japanese National Patent Publication No. 2014-531967
PTL 5: WO 2007/039955
PTL 6: WO 2005/066381

### SUMMARY OF INVENTION

A composite sintered material according to the present disclosure includes: a plurality of diamond grains having an average grain size of less than or equal to 10 µm; a plurality of cubic boron nitride grains having an average grain size of less than or equal to 2 µm; and a remainder of a binder phase, wherein at least parts of adjacent diamond grains are bound to one another, the binder phase includes cobalt, in the composite sintered material, a content of the diamond grains is more than or equal to 30 volume % and less than or equal to 94 volume %, a content of the cubic boron nitride grains is more than or equal to 3 volume % and less than or equal to 40 volume %, and a content of the cobalt is more than or equal to 3 volume % and less than or equal to 30 volume %.

### DETAILED DESCRIPTION

### [Problems to be Solved by the Present Disclosure]

In response to an increased airplane demand in recent years, it has been desired to process, at a high speed, a turbine disc and a blisk, which are main components of a jet engine and are composed of a heat-resistant alloy represented by Inconel 718 (Ni group alloy) or Ti-6Al-4V; however, currently, finish processing is performed using a carbide tool at a low cutting speed of about 50 m/min. Thus, there is no tool that satisfies the market need for the high-speed processing.

In each of the diamond sintered materials disclosed in Japanese Patent Laying-Open No. 2005-239472 (Patent Literature 1), Japanese Patent Laying-Open No. 9-316587 (Patent Literature 2), Japanese Patent Laying-Open No. 1-17836 (Patent Literature 3), and Japanese National Patent Publication No. 2014-531967 (Patent Literature 4), the main component, diamond, has a very high affinity to an alloy including an iron group element (group 8, 9 and 10 elements of period 4 in the periodic table, i.e., a general term of three elements of iron, cobalt, and nickel; the same applies to the description below) and/or titanium, is therefore highly reactive, starts to be carbonized at more than or equal to 600°C in air to have a decreased hardness, and is burned at more than or equal to 800°C in air. Hence, each of the diamond sintered materials is inferior in thermal stability. For this reason, it is commonly known that each of such diamond sintered materials is not used for high-speed processing of a heat-resistant alloy including an iron group element and/or titanium.

In each of the cubic boron nitride (cBN) sintered bodies disclosed in WO 2007/039955 (Patent Literature 5) and WO 2005/066381 (Patent Literature 6), the main component, cBN, has a low affinity to an alloy including an iron group element and/or titanium. Each of the cubic boron nitride (cBN) sintered bodies exhibits high wear resistance even in high-speed processing of a heat-resistant alloy composed of an alloy including an iron group element and/or titanium. However, since breakage resistance of each of the cBN sintered bodies is low, chipping occurs at an early stage in the high-speed processing of the heat-resistant alloy including an iron group element and/or titanium, thus failing to attain a practical life as a tool.

In order to solve the above-described problem, it is an object to provide a composite sintered material that is applicable also to high-speed processing of a heat-resistant alloy including an iron group element and/or titanium and that has both high wear resistance and high breakage resistance.

### [Advantageous Effect of the Present Disclosure]

According to the present disclosure, there can be provided a composite sintered material that is applicable also to high-speed processing of a heat-resistant alloy including an iron group element and/or titanium and that has both high wear resistance and high breakage resistance.

### [Description of Embodiments]

First, embodiments of the present invention are listed and described.
[1] A composite sintered material according to a certain embodiment of the present invention includes: a plurality of diamond grains having an average grain size of less than or equal to 10 µm; a plurality of cubic boron nitride grains having an average grain size of less than or equal to 2 µm; and a remainder of a binder phase, wherein at least parts of adjacent diamond grains are bound to one another, the binder phase includes cobalt, in the composite sintered material, a content of the diamond grains is more than or equal to 30 volume % and less than or equal to 94 volume %, a content of the cubic boron nitride grains is more than or equal to 3 volume % and less than or equal to 40 volume %, and a content of the cobalt is more than or equal to 3 volume % and less than or equal to 30 volume %. The composite sintered material of the present embodiment has both high wear resistance and high breakage resistance.
[2] In the composite sintered material according to the present embodiment, the average grain size of the diamond grains can be less than or equal to 2 µm, and the average grain size of the cubic boron nitride grains is less than or equal to 1 µm, and in the composite sintered material, the content of the diamond grains can be more than or equal to 50 volume % and less than or equal to 70 volume %, the content of the cubic boron nitride grains can be more than or equal to 10 volume % and less than or equal to 30 volume %, and the content of the cobalt can be more than or equal to 10 volume % and less than or equal to 20 volume %. In such a composite sintered material, the strength becomes high to result in high chipping resistance in addition to the high wear resistance and the high breakage resistance.
[3] In the composite sintered material according to the present embodiment, the binder phase can further include a chemical component including at least one element selected from a group consisting of tungsten, titanium, zirconium, hafnium, niobium, tantalum, chromium, aluminum, silicon, and molybdenum, and in the binder phase, the content of the cobalt can be more than or equal to 50 mass % and less than or equal to 99.5 mass %, and a content of the chemical component can be more than or equal to 0.5 mass % and less than or equal to 50 mass %. In such a composite sintered material, the strength becomes high to result in high chipping resistance in addition to the high wear resistance and the high breakage resistance.
[4] In the composite sintered material according to the present embodiment, at least a part of the chemical component included in the binder phase can be at least one of a carbide, a carbonitride, a nitride, an oxide, a boride, and an oxynitride. Such a composite sintered material has both high wear resistance and high breakage resistance, and the wear resistance is particularly high.
[5] In the composite sintered material according to the present embodiment, heat conductivity of the composite sintered material can be more than or equal to 100 W·m⁻¹·K⁻¹. In such a composite sintered material, a temperature is suppressed from being increased in high-speed processing, and the composite sintered material has both high wear resistance and high breakage resistance as well as a long life as a tool.
[6] A composite sintered material according to the present embodiment can include: a plurality of diamond grains having an average grain size of less than or equal to 2 µm; a plurality of cubic boron nitride grains having an average grain size of less than or equal to 1 µm; and a remainder of a binder phase, wherein at least parts of adjacent diamond grains can be bound to one another, the binder phase includes cobalt and a chemical component including at least one element selected from a group consisting of tungsten, titanium, zirconium, hafnium, niobium, tantalum, chromium, aluminum, silicon, and molybdenum, in the composite sintered material, a content of the diamond grains can be more than or equal to 50 volume % and less than or equal to 70 volume %, a content of the cubic boron nitride grains can be more than or equal to 10 volume % and less than or equal to 30 volume %, and a content of the cobalt can be more than or equal to 10 volume % and less than or equal to 20 volume %, in the binder phase, the content of the cobalt can be more than or equal to 50 mass % and less than or equal to 99.5 mass %, and a content of the chemical component can be more than or equal to 0.5 mass % and less than or equal to 50 mass %, at least a part of the chemical component included in the binder phase can be at least one of a carbide, a carbonitride, a nitride, an oxide, a boride, and an oxynitride, and heat conductivity of the composite sintered material can be more than or equal to 100 W·m⁻¹·K⁻¹. Such a composite sintered material has high chipping resistance in addition to the high wear resistance and the high breakage resistance, as well as a long life as a tool.

### [Details of Embodiments of the Present Invention]

### <Composite Sintered Material>

A composite sintered material according to the present embodiment includes: a plurality of diamond grains having an average grain size of less than or equal to 10 µm; a plurality of cubic boron nitride (cBN) grains having an average grain size of less than or equal to 2 µm; and a remainder of a binder phase, wherein at least parts of adjacent diamond grains are bound to one another, the binder phase includes cobalt, in the composite sintered material, a content of the diamond grains is more than or equal to 30 volume % and less than or equal to 94 volume %, a content of the cubic boron nitride grains is more than or equal to 3 volume % and less than or equal to 40 volume %, and a content of the cobalt is more than or equal to 3 volume % and less than or equal to 30 volume %. The composite sintered material of the present embodiment has both high wear resistance and high breakage resistance by combining the diamond grains and the cBN grains.

The present inventors used a cBN sintered material to form an end mill, which is one type of cutting tool. The present inventors found that when the end mill just before a cutting edge thereof was chipped was observed during processing of a heat-resistant alloy (for example, Inconel (registered trademark) 718) including an iron group element, a crack generated inside the end mill extended through a cBN grain in the cutting edge. Accordingly, it was found that toughness and strength of the cBN grains are insufficient for a tool for processing a heat-resistant alloy including an iron group element and/or titanium, and the performance thereof is not expected to be greatly improved by continuously modifying the cBN sintered material in the conventional manner.

Next, the present inventors formed an end mill using a diamond sintered material, which is not used normally, because it was considered that a cutting distance per cutting edge was short and a temperature of the cutting edge was less likely to be increased in high-speed processing of a heat-resistant alloy including an iron group element and/or titanium by the end mill. Then, the present inventors processed a heat-resistant alloy (for example, Inconel (registered trademark) 718) including an iron group element. As a result, chipping, which frequently occurs in the end mill formed using the cBN sintered material, did not occur in the end mill formed using the diamond sintered material; however, a wear rate of the end mill formed using the diamond sintered material is higher than that of the end mill formed using the cBN sintered material, with the result that a practical tool life was not obtained.

To address this, the present inventors considered to combine cBN grains allowing for high wear resistance with diamond grains allowing for high breakage resistance. As a result, the present inventors succeeded in obtaining a composite sintered material having both high wear resistance and high breakage resistance by combining a suitable content of diamond grains for such a presumption that at least parts of the diamond grains are bound to one another to form a continuous skeleton structure with a suitable content of cBN grains for such a presumption that the cBN grains are placed in a gap in the skeleton structure by a manufacturing process for forming the skeleton structure.

### (Diamond Grains)

The average grain size of the diamond grains is less than or equal to 10 µm and is preferably less than or equal to 2 µm in order to obtain a high-strength composite sintered material having both high wear resistance and high breakage resistance. Here, the average grain size of the diamond grains is determined in the following manner: an appropriately specified cross section of the composite sintered material is produced through a CP process employing a cross section polisher (CP) apparatus or the like; the diamond grains are identified in the cross section through EDX (energy dispersive X-ray spectroscopy); and assuming that the diamond grains are dispersed homogeneously in the composite sintered material, equivalent circle diameters and average of the grains are calculated using image analysis software based on the cross sectional area of each grain.

The content of the diamond grains in the composite sintered material is more than or equal to 30 volume % and less than or equal to 94 volume %, and is preferably more than or equal to 50 volume % and less than or equal to 70 volume % in view of suitability for forming the continuous skeleton structure in which at least parts of the diamond grains are bound to one another. Here, the content of the diamond grains in the composite sintered material is calculated in the following manner: in the appropriately specified cross section of the composite sintered material, the diamond grains are identified by EDX (energy dispersive X-ray spectroscopy); assuming that the diamond grains are dispersed homogeneously in the composite sintered material, an area % of a cross sectional area of the diamond grains with respect to the total area of the cross section is regarded as a volume %. It should be noted that the continuous skeleton structure formed by at least parts of adjacent diamond grains being bound to one another in the composite sintered material is observed by SEM (scanning electron microscope).

### (Cubic Boron Nitride Grains)

The average grain size of the cBN (cubic boron nitride) grains is less than or equal to 2 µm, and is preferably less than or equal to 1 µm in order to obtain a high-strength composite sintered material having both high wear resistance and high breakage resistance. Here, the average grain size of the cBN grains is calculated by the same method as that for the diamond grains. The content of the cBN grains in the composite sintered material is more than or equal to 3 volume % and less than or equal to 40 volume %, and is preferably more than or equal to 10 volume % and less than or equal to 30 volume % in view of suitability for placing the cBN grains in the gap in the above-described skeleton structure formed of the diamond grains. Here, the content of the cBN grains in the composite sintered material is calculated in the following manner: in the appropriately specified cross section of the composite sintered material, the cBN grains are identified by EDX (energy dispersive X-ray spectroscopy); and assuming that the cBN grains are dispersed homogeneously in the composite sintered material, an area % of a cross sectional area of the cBN grains with respect to the total area of the cross section is regarded as a volume %.

### (Binder Phase)

The binder phase includes cobalt (Co) in order to bind at least parts of adjacent diamond grains to one another. The content of Co in the composite sintered material is more than or equal to 3 volume % and less than or equal to 30 volume %, and is preferably more than or equal to 10 volume % and less than or equal to 20 volume % in order to bind at least parts of adjacent diamond grains to one another. Here, the content of Co in the composite sintered material is calculated in the following manner: in the appropriately specified cross section of the composite sintered material, Co is identified by EDX (energy dispersive X-ray spectroscopy); and assuming that Co is dispersed homogeneously in the composite sintered material, an area % of a cross sectional area specified as Co with respect to the total area of the cross section is regarded as a volume %.

In order to increase the strength of the composite sintered material, the binder phase preferably further includes a chemical component including at least one element selected from a group consisting of tungsten (W), titanium (Ti), zirconium (Zr), hafnium (Hf), niobium (Nb), tantalum (Ta), chromium (Cr), aluminum (Al), silicon (Si), and molybdenum (Mo). In order to increase the strength of the composite sintered material by binding at least parts of adjacent diamond grains to one another, the content of Co in the binder phase is preferably more than or equal to 50 mass % and less than or equal to 99.5 mass %, and is more preferably more than or equal to 55 mass % and less than or equal to 70 mass %. Moreover, in order to increase the strength of the composite sintered material, the content of the above-described chemical component (chemical component including at least one element selected from the group consisting of W, Ti, Zr, Hf, Nb, Ta, Cr, Al, Si, and Mo) in the binder phase is preferably more than or equal to 0.5 mass % and less than or equal to 50 mass %, and is more preferably more than or equal to 30 mass % and less than or equal to 45 mass %. The respective contents of Co and the chemical component in the binder phase are calculated by performing the CP process onto the appropriately specified cross section of the composite sintered material and determining a mass ratio of Co and the chemical component measured through a quantitative analysis in EDX (energy dispersive X-ray spectroscopy).

In order to increase the wear resistance of the composite sintered material, a part of the above-described chemical component (chemical component including at least one element selected from the group consisting of W, Ti, Zr, Hf, Nb, Ta, Cr, Al, Si, and Mo) included in the binder phase is preferably at least one of a carbide, a carbonitride, a nitride, an oxide, a boride, and an oxynitride. Examples thereof include: a carbide such as TiC; a carbonitride such as TiCN; a nitride such as TiN; an oxide such as Al₂O₃; a boride such as TiB₂; and an oxynitride such as Sialon (SiAlON). The type of the chemical component is identified in accordance with a diffraction peak pattern of XRD (X-ray diffraction).

### (Heat Conductivity)

In order to suppress increase of the temperature of the composite sintered material such that the composite sintered material can be used in a long life for high-speed processing of a heat-resistant alloy including an iron group element and/or titanium, the heat conductivity of the composite sintered material is preferably more than or equal to 100 W·m⁻¹·K⁻¹ and is more preferably more than or equal to 120 W· m⁻¹·K⁻¹. Here, the heat conductivity of the composite sintered material is calculated based on thermal diffusivity and specific heat measured by the laser flash method and density measured by the Archimedes method.

The composite sintered material of the present embodiment is preferably a composite sintered material including: a plurality of diamond grains having an average grain size of less than or equal to 2 µm; a plurality of cubic boron nitride grains having an average grain size of less than or equal to 1 µm; and a remainder of a binder phase, wherein at least parts of adjacent diamond grains are bound to one another, the binder phase includes Co and a chemical component including at least one element selected from a group consisting of W, Ti, Zr, Hf, Nb, Ta, Cr, Al, Si, and Mo, in the composite sintered material, a content of the diamond grains is more than or equal to 50 volume % and less than or equal to 70 volume %, a content of the cubic boron nitride grains is more than or equal to 10 volume % and less than or equal to 30 volume %, and a content of the cobalt is more than or equal to 10 volume % and less than or equal to 20 volume %, in the binder phase, the content of the cobalt is more than or equal to 50 mass % and less than or equal to 99.5 mass %, and a content of the chemical component is more than or equal to 0.5 mass % and less than or equal to 50 mass %, at least a part of the chemical component included in the binder phase is at least one of a carbide, a carbonitride, a nitride, an oxide, a boride, and an oxynitride, and heat conductivity of the composite sintered material is more than or equal to 100 W·m⁻¹·K⁻¹. Such a composite sintered material has high chipping resistance in addition to high wear resistance and high breakage resistance, as well as a long life as a tool.

### <Method for Manufacturing Composite Sintered Material>

Although not particularly limited, in order to manufacture the composite sintered material of the present embodiment efficiently, a method for manufacturing a composite sintered material according to the present embodiment preferably includes: a first step of forming binder-coated diamond powder by coating at least a portion of a surface of each particle of diamond powder with a binder including Co; a second step of forming a mixture by mixing the binder-coated diamond powder and cBN powder; and a third step of forming the composite sintered material by sintering the mixture.

### (First Step)

In the first step, the binder-coated diamond powder is formed by coating at least a portion of the surface of each particle of the diamond powder with the binder including Co. By sintering the mixture of the binder-coated diamond powder and the cBN powder in the subsequent step, the composite sintered material of the present embodiment is obtained.

The average particle size of the diamond powder used in the first step is not particularly limited, but is less than or equal to 10 µm, and is preferably less than or equal to 2 µm in order to form a composite sintered material having high strength, high wear resistance and high breakage resistance. A method for coating at least a portion of the surface of each particle of the diamond powder with the binder including Co is not particularly limited, but is preferably an electroless plating method, an arc deposition method, a powder sputtering method, or the like in order to attain a small amount of impurity and uniform coating. In order to form a composite sintered material having high strength, high wear resistance and high breakage resistance, the binder preferably includes not only Co but also a chemical component including at least one element selected from a group consisting of W, Ti, Zr, Hf, Nb, Ta, Cr, Al, Si, and Mo. In the subsequent step, the binder forms the binder phase in the composite sintered material.

### (Second Step)

In the second step, the mixture is formed by mixing the binder-coated diamond powder and the cBN powder. By sintering this mixture in the subsequent step, the composite sintered material of the present embodiment is obtained. Moreover, in order to adjust an amount of the binder in the sintered material, the binder can also be added in this step. The first step can be skipped when the binder is added in the second step; however, it is preferable to perform the first step.

The average particle size of the cBN powder used in the second step is not particularly limited, but is less than or equal to 2 µm and is preferably less than or equal to 1 µm in order to form a composite sintered material having high strength, high wear resistance and high breakage resistance. A method for mixing the binder-coated diamond powder and the cBN powder is not particularly limited, but is preferably ball mill mixing, bead mill mixing, planetary mill mixing, jet mill mixing, or the like in order to mix them homogeneously and efficiently. Moreover, as described above, the binder can be also mixed on this occasion. By adjusting the amount of the binder-coated diamond powder (that is, the amount of the diamond powder and the amount of the binder relative to the diamond powder), the amount of the cBN powder, and the contents of Co and the chemical component in the binder, it is possible to obtain: a desired content of the diamond grains, a desired content of the cBN grains, and a desired content of Co in the composite sintered material; and a desired content of Co and a desired content of the chemical component in the binder phase.

### (Third Step)

In the third step, the composite sintered material is formed by sintering the mixture. Conditions in sintering the mixture are not particularly limited, but in order to obtain the composite sintered material of the present embodiment efficiently, a sintering pressure is preferably more than or equal to 4 GPa and less than or equal to 10 GPa and is more preferably more than or equal to 6 GPa and less than or equal to 8 GPa, a sintering temperature is preferably more than or equal to 1400°C and less than or equal to 2000°C and is more preferably more than or equal to 1500°C and less than or equal to 1800°C. In order to form the skeleton structure of the diamond grains, a longer sintering time is more preferable. The sintering time is preferably more than or equal to 15 minutes and less than or equal to 60 minutes. Normally, although abnormal grain growth is resulted when fine diamond particles are sintered for a long time under a high-pressure of more than or equal to 6 GPa and a high temperature of more than or equal to 1500°C, the cBN grains are placed in the diamond lattice in the present embodiment to suppress abnormal grain growth, whereby sintering can be performed for a longer time than that in the conventional art.

### [Examples]

### (Example I)

In the present example, as shown in No. 1-1 to No. 1-12 in Table 1, composite sintered materials were produced to have different average grain sizes and contents of diamond grains and cBN grains and different contents of binders, and respective hardness, fracture toughness values, and heat conductivities thereof were measured. Further, cutting tools were produced using these composite sintered materials, and respective flank wear widths of cutting edges thereof in high-speed cutting of Inconel (registered trademark) 718 were measured to evaluate respective lives thereof.

Each of the composite sintered materials was produced as follows. A surface of each particle of diamond powder having an average particle size of 1 µm was coated, by the electroless plating method, with 6 mass % of Co serving as the binder with respect to the diamond particle. Then, the Co-coated diamond powder and cBN powder having an average particle size of 1 µm were wet-blended by the ball mill method to produce a mixture, and the mixture was subjected to a vacuum heat treatment at 1200°C for 30 minutes in order to remove gas on the particle surface.
This mixture was introduced into a container composed of Ta (tantalum) with the mixture being in contact with a WC-6%Co cemented carbide disc and a Co foil, and was sintered by holding the mixture for 30 minutes at a pressure of 6 GPa and a temperature of 1650°C using a belt type ultra-high pressure and high temperature generator, thereby producing the composite sintered material.

The sintering is progressed in such a manner that an eutectic melt of WC-6% Co and Co is infiltrated into the composite sintered material from the WC-6% Co cemented carbide disc and the Co foil during the sintering. Hence, the respective contents of the diamond grains and the cBN grains and the composition of the binder phase in the composite sintered material are slightly different from those in the prepared composition of the mixture. Hence, the prepared composition of the mixture was designed in view of an expected amount of the infiltrated eutectic crystal melt.

When the appropriately specified cross section of the produced composite sintered material was polished using an argon ion beam and the structure of the composite sintered material was observed using SEM (scanning electron microscope), a continuous skeleton structure in which at least parts of the diamond grains are bound to one another was observed in the case of each of No. 1-1 to No. 1-8, No. 1-11, and No. I-12. Moreover, the respective contents of the diamond grains, the cBN grains, and Co of the binder phase in the composite sintered material were calculated using image analysis software (WinROOF provided by Mitani Corporation) by identifying the diamond grains, the cBN grains, and the binder phase through EDX (energy dispersive X-ray spectroscopy) and regarding, as a volume %, an area % of the cross sectional area of the diamond grains with respect to the total area of the cross section assuming that the diamond grains were dispersed homogeneously in the composite sintered material. The respective average grain sizes were calculated in the same manner as in the measurement of the contents by identifying each grain by EDX and calculating the equivalent circle diameter based on the cross sectional area of each grain using the image analysis software (WinROOF provided by Mitani Corporation).

Moreover, the strength of each of the produced composite sintered materials was measured using a Vickers hardness meter with a load of 50 kgf, the fracture toughness value of each of the produced composite sintered materials was calculated by the IF method defined in JIS R1607:2010, and the heat conductivity of each of the produced composite sintered materials was calculated by measuring thermal diffusivity and specific heat using the laser flash method and measuring density by the Archimedes method. Results thereof are collectively shown in Table 1.

Each of the above-described composite sintered materials was used to produce a cutting tool constituted of: an end mill type cutter of the RSX12032ES model (cutting diameter of 32 mm); and an insert of the RDET1204M0 model. The produced cutting tool was used to cut the upper surface of a workpiece of Inconel (registered trademark) 718 in the form of a disc having an outer diameter of 95 mm (material having been through solution treatment and age-hardening treatment as provided by Daido-Special Metals; Rockwell hardness HRC44; grain size corresponding to grain size number 9 defined in E112 of ASTM (American Society for Testing and Materials)). Cutting conditions were as follows: a cutting speed Vc was 600 m/min; a feed rate f was 0.15 mm/cutting edge; a depth of cut ap was 0.5 mm; a radial depth of cut ae was 0.12 mm; and coolant was WET (20x-diluted emulsion). Results thereof are collectively shown in Table 1. "Flank Wear and/or Chipping Width" in Table 1 represents a value when the length of cut of the workpiece was 0.45 m. Moreover, "Life" in Table 1 represents the length of cut of the workpiece when the flank wear and/or the chipping width became more than 0.1 mm.

**[Table 1]**

| No. | | | I-1 | I-2 | I-3 | I-4 | I-5 | I-6 | I-7 | I-8 | I-9 | I-10 | I-11 | I-12 |
|---|---|---|---|---|---|---|---|---|---|---|---|---|---|---|
| Diamond Grains | | Average Grain Size (µm) | 1 | 1 | 1 | 1 | 1 | 1 | 1 | 1 | 1 | - | 2 | 4 |
| | | Content (Volume %) | 92 | 78 | 70 | 60 | 48 | 55 | 30 | 90 | 25 | 0 | 78 | 78 |
| cBN Grains | | Average Grain Size (µm) | 1 | 1 | 1 | 1 | 1 | 1 | 1 | - | 1 | 1 | 2 | 3 |
| | | Content (Volume %) | 3 | 10 | 15 | 20 | 20 | 30 | 40 | 0 | 40 | 90 | 12 | 12 |
| Binder | | Prepared Composition (Mass %) | Co: 100 | Co: 100 | Co: 100 | Co: 100 | Co: 100 | Co: 100 | Co: 100 | Co: 100 | Co: 100 | Co: 100 | Co: 100 | Co: 100 |
| Binder Phase | | Co Content (Volume %) | 3 | 10 | 13 | 18 | 30 | 13 | 28 | 8 | 33 | 8 | 8 | 8 |
| | | Composition (Mass %) | Co: 84.2 | Co: 83.8 | Co: 85.1 | Co: 82.7 | Co: 84.1 | Co: 83.4 | Co: 84.2 | Co: 83.6 | Co: 84.9 | Co: 82.2 | Co: 84.2 | Co: 83.7 |
| | | | W: 12.8 | W: 12.5 | W: 12.3 | W: 13.7 | W: 12.3 | W: 13.2 | W: 13.1 | W: 13.3 | W: 12.4 | W: 14.9 | W: 12.2 | W: 12.6 |
| Hardness (GPa) | | | 52.5 | 49.5 | 45.6 | 42.5 | 37.3 | 40.7 | 33.5 | 56.1 | 28.8 | 42.5 | 46.7 | 48.5 |
| Fracture Toughness Value (MPa·m^{1/2}) | | | 19.3 | 17.6 | 16.4 | 15.1 | 13.4 | 14.5 | 12.1 | 21.1 | 10.4 | 9.8 | 21.3 | 23.1 |
| Heat Conductivity (W·m⁻¹·K⁻¹) | | | 203 | 222 | 163 | 125 | 106 | 115 | 102 | 246 | 95 | 76 | 188 | 239 |
| Cutting Result | Flank Wear and/or Chipping Width (µm) | | 73 | 63 | 52 | 48 | 62 (c) | 54 (c) | 79 (c) | 102 | Breakage | Breakage | 78 (c) | Breakage |
| | Life (m) | | 0.75 | 0.95 | 1.15 | 1.24 | 0.93 (c) | 1.08 (c) | 0.83 (c) | 0.41 | 0.22 | 0.13 | 0.82 (c) | 0.08 |
| Notes | | | Example | Example | Example | Example | Example | Example | Example | Comparative Example | Comparative Example | Comparative Example | Example | Comparative Example |

| | | | | | | | | | | | | | | |
|---|---|---|---|---|---|---|---|---|---|---|---|---|---|---|
| (c) : Life expired due to chipping | | | | | | | | | | | | | | |

In each of the cutting tools produced by the composite sintered materials produced in No. 1-1 to No. 1-7 and No. 1-11 of Table 1, the flank face was not broken, the flank wear and/or the chipping width were small, and the life was long irrespective of whether it reach to the tool life due to wear or chipping in the high-speed processing of Inconel (registered trademark) 718, which is a heat-resistant alloy composed of an alloy including an iron group element. That is, both high wear resistance and high breakage resistance were achieved in the composite sintered material including: the diamond grains having an average grain size of less than or equal to 10 µm; the cubic boron nitride grains having an average grain size of less than or equal to 2 µm; and a remainder of the binder phase, wherein at least parts of adjacent diamond grains are bound to one another, the binder phase includes cobalt, and in the composite sintered material, the content of the diamond grains is more than or equal to 30 volume % and less than or equal to 94 volume %, the content of the cubic boron nitride grains is more than or equal to 3 volume % and less than or equal to 40 volume %, and the content of the cobalt is more than or equal to 3 volume % and less than or equal to 30 volume %. The cutting tool formed using such a composite sintered material had a long life even in the high-speed processing of Inconel (registered trademark) 718, which is a heat-resistant alloy composed of an alloy including iron. Here, in Table 1 and Table 2 below, "Chipping" indicated by (c) means a minute chipping, as a result of which cutting can be performed nonetheless. Meanwhile, "Breakage" shown in Table 1 means a large chipping, as a result of which cutting cannot be performed.

### (Example II)

In the present example, as shown in No. II-1 to No. II-12 of Table 2, composite sintered materials and cutting tools were produced in the same manner as in Example I except that not only Co but also a chemical component including at least one element selected from a group consisting of W, Ti, Zr, Hf, Nb, Ta, Cr, Al, Si, and Mo were used as a binder. Physical properties thereof were evaluated. Here, for a raw material of the above-described chemical component, fine metal powder having an average particle size of less than or equal to 2 µm and obtained using an atomizing method was used. In each of the binder phases of the composite sintered materials produced in No. II-1 to No. II-12, a simple substance of the at least one element selected from the group consisting of W, Ti, Zr, Hf, Nb, Ta, Cr, Al, Si, and Mo, or an alloy of the at least one element and Co, or a carbide, a boride, a nitride, a carbonitride, an oxide, and an oxynitride thereof, or the like was formed. Formation of the simple substance and compound was confirmed by XRD in each of the composite sintered materials. For the XRD, measurement was performed using an X-ray light source with Cu-Kα rays in a range of 20° to 80° with a scanning step of 0.02°. A composition ratio in the binder phase was calculated by determining a ratio of cobalt and the other chemical components using a quantitative analysis of EDX.

Cutting conditions were as follows: a cutting speed Vc was 300 m/min; a feed rate f was 0.15 mm/cutting edge; a depth of cut ap was 0.5 mm; a radial depth of cut ae was 0.12 mm; and coolant was WET (20x-diluted emulsion). Results thereof are collectively shown in Table 2. "Flank Wear and/or Chipping Width" in Table 2 represents a value when the length of cut of the workpiece was 0.45 m. Moreover, "Life" in Table 2 represents the length of cut of the workpiece when the flank wear and/or the chipping width became more than 0.1 m. Moreover, in Example II, as an additional evaluation for each of the composite sintered materials, transverse rupture strength (TRS (three-point bending strength)) measurement was performed. The transverse rupture strength (TRS) was measured at a span of 4 mm using a test piece of the composite sintered material with 6 mm in length × 3 mm in width × 0.4 to 0.45 mm in thickness.

**[Table 2]**

| No. | | | II-1 | II-2 | II-3 | II-4 | II-5 | II-6 | II-7 | II-8 | II-9 | II-10 | II-11 | II-12 |
|---|---|---|---|---|---|---|---|---|---|---|---|---|---|---|
| Diamond Grains | | Average Grain Size (µm) | 0.5 | 0.5 | 0.5 | 0.5 | 0.5 | 0.5 | 0.5 | 0.5 | 0.5 | 5 | 10 | 25 |
| | | Content (Volume %) | 60 | 60 | 60 | 60 | 60 | 60 | 60 | 60 | 60 | 60 | 60 | 60 |
| cBN Grains | | Average Grain Size (µm) | 0.5 | 0.5 | 0.5 | 0.5 | 0.5 | 0.5 | 0.5 | 0.5 | 0.5 | 1 | 1 | 1 |
| | | Content (Volume %) | 20 | 20 | 20 | 20 | 20 | 20 | 20 | 20 | 20 | 20 | 20 | 20 |
| Binder | | Prepared Composition (Mass %) | Co: 100 | Co: 50 | Co: 50 | Co: 50 | Co: 50 | Co: 50 | Co: 50 | Co: 50 | Co: 50 | Co: 90 | Co: 87 | Co: 85 |
| | | | | W: 35 | W: 35 | W: 35 | W: 35 | W: 35 | W: 35 | W: 35 | W: 35 | | | |
| | | | | Ti: 10 | Zr: 10 | Hf: 10 | Nb: 10 | Ta: 10 | Cr: 10 | Al: 10 | Mo: 10 | W: 5 | W: 8 | W: 10 |
| Binder Phase | | Co Content (Volume %) | 18 | 16.2 | 16.1 | 16.4 | 17.1 | 16.6 | 16.2 | 16.9 | 17.2 | 15.4 | 13.7 | 11.2 |
| | | Composition (Mass %) | Co: 82.5 | Co: 52.1 | Co: 51.0 | Co: 51.4 | Co: 51.7 | Co: 51.1 | Co: 50.2 | Co: 50.7 | Co: 51.3 | Co: 88.3 | Co: 85.7 | Co: 82.5 |
| | | | | W: 35.3 | W: 30.5 | W: 33.3 | W: 35.3 | W: 33.2 | W: 37.9 | W: 34.6 | W: 32.3 | | | |
| | | | W: 13.1 | Ti: 8.0 | Zr: 10.4 | Hf: 9.3 | Nb: 8.0 | Ta: 8.2 | Cr: 7.3 | Al: 8.8 | Mo: 8.5 | W: 8.3 | W: 10.2 | W: 13.8 |
| Hardness (GPa) | | | 41.5 | 45.2 | 47.7 | 48.1 | 47.8 | 46.5 | 45.8 | 46.2 | 47.1 | 47.2 | 51.4 | 64.2 |
| Fracture Toughness Value (MPa·m^{1/2}) | | | 16.1 | 15.7 | 15.9 | 15.1 | 16.2 | 15.7 | 16.2 | 15.1 | 17.2 | 17.3 | 21.3 | 23.5 |
| Transverse Rupture Strength (GPa) | | | 2.25 | 2.74 | 2.65 | 2.82 | 2.59 | 2.63 | 2.68 | 2.71 | 2.78 | 2.21 | 1.53 | 1.12 |
| Heat Conductivity (W·m⁻¹·K⁻¹) | | | 122 | 133 | 134 | 128 | 130 | 135 | 132 | 125 | 136 | 165 | 232 | 306 |
| Cutting Result | Flank Wear and/or Chipping Width (µm) | | 53 | 43 | 41 | 46 | 45 | 49 | 43 | 44 | 47 | 55 (c) | 58 (c) | 85 (c) |
| | Life (m) | | 1.45 | 1.93 | 1.87 | 1.79 | 1.92 | 2.02 | 1.85 | 1.93 | 1.79 | 1.41 (c) | 1.32 (c) | 0.51 (c) |
| Notes | | | Example | Example | Example | Example | Example | Example | Example | Example | Example | Example | Example | Comparative Example |

| | | | | | | | | | | | | | | |
|---|---|---|---|---|---|---|---|---|---|---|---|---|---|---|
| (c) : Life expired due to chipping | | | | | | | | | | | | | | |

In each of the cutting tools produced by the composite sintered materials produced in No. II-1 to No. II-11 of Table 2, the flank face was not broken, the flank wear and/or the chipping width were small, and the life was long irrespective of whether it reach to the tool life due to wear or chipping in the high-speed processing of Inconel (registered trademark) 718, which is a heat-resistant alloy composed of an alloy including an iron group element. That is, both high wear resistance and high breakage resistance were achieved in the composite sintered material including: the diamond grains having an average grain size of less than or equal to 10 µm; the cubic boron nitride grains having an average grain size of less than or equal to 2 µm; and the remainder of the binder phase, wherein at least parts of adjacent diamond grains are bound to one another, the binder phase includes cobalt and a chemical component including at least one element selected from a group consisting of W, Ti, Zr, Hf, Nb, Ta, Cr, Al, Si, and Mo, the content of the diamond grains is more than or equal to 30 volume % and less than or equal to 94 volume % in the composite sintered material, the content of the cubic boron nitride grains is more than or equal to 3 volume % and less than or equal to 40 volume % in the composite sintered material, and the content of the cobalt is more than or equal to 3 volume % and less than or equal to 30 volume % in the composite sintered material, the content of the cobalt is more than or equal to 50 mass % and less than or equal to 99.5 mass % in the binder phase, and the content of the chemical component is more than or equal to 0.5 mass % and less than or equal to 50 mass % in the binder phase. The cutting tool formed using such a composite sintered material had a long life even in the high-speed processing of Inconel (registered trademark) 718, which is a heat-resistant alloy composed of an alloy including an iron group element.

### (Example III)

In the present example, as shown in No. III-1 to No. III-7 of Table 3, composite sintered materials and cutting tools were produced in the same manner as in Example I except that not only Co but also a chemical component including a compound of at least one element selected from a group consisting of W, Ti, Zr, Hf, Nb, Ta, Cr, Al, Si, and Mo were used as a binder. Physical properties thereof were evaluated. Here, for a raw material of the chemical component, compound powder pulverized using a bead mill to an average particle size of about 0.5 µm was used.

Cutting conditions were as follows: a cutting speed Vc was 800 m/min; a feed rate f was 0.15 mm/cutting edge; a depth of cut ap was 0.5 mm; a radial depth of cut ae was 0.12 mm; and coolant was WET (20x-diluted emulsion). Results thereof are collectively shown in Table 3. "Flank Wear and/or Chipping Width" in Table 3 represents a value when the length of cut of the workpiece was 0.45 m. Moreover, "Life" in Table 3 represents the length of cut of the workpiece when the flank wear and/or the chipping width became more than 0.1 m.

**[Table 3]**

| No. | | | III-1 | III-2 | III-3 | III-4 | III-5 | III-6 | III-7 |
|---|---|---|---|---|---|---|---|---|---|
| Diamond Grains | | Average Grain Size (µm) | 1 | 1 | 1 | 1 | 1 | 1 | 1 |
| | | Content (Volume %) | 60 | 60 | 60 | 60 | 60 | 60 | 60 |
| cBN Grains | | Average Grain Size (µm) | 1 | 1 | 1 | 1 | 1 | 1 | 1 |
| | | Content (Volume %) | 20 | 20 | 20 | 20 | 20 | 20 | 20 |
| Binder | | Prepared Composition (Mass %) | Co: 100 | Co: 60 | Co: 60 | Co: 60 | Co: 60 | Co: 60 | Co: 60 |
| | | | | TiC: 40 | TiN: 40 | TiCN: 40 | SiAlON: 40 | Al₂O₃: 40 | Ti: 40 |
| Binder Phase | | Co Content (Volume %) | 18 | 12 | 12 | 12 | 12 | 12 | 12 |
| | | Composition (Mass %) | Co: 82.7 | | | | | | Co: 61.2 |
| | | | | Co: 61.1 | Co: 60.4 | Co: 61.4 | Co: 60.8 | Co: 60.5 | TiB₂: 16.5 |
| | | | W: 13.7 | TiC: 33.2 | TiN: 34.7 | TiCN: 33.6 | SiAlON: 33.9 | Al₂O₃: 33.8 | TiC: 15.1 |
| | | | | W: 3.7 | W: 3.3 | W: 3.1 | W: 3.5 | W: 3.1 | W: 3.2 |
| Hardness (GPa) | | | 42.5 | 44.5 | 43.7 | 44.1 | 45.1 | 44.2 | 42.8 |
| Fracture Toughness Value (MPa·m^{1/2}) | | | 15.1 | 14.7 | 14.5 | 14.6 | 15.2 | 14.1 | 15.3 |
| Heat Conductivity (W·m⁻¹· K⁻¹) | | | 125 | 131 | 138 | 132 | 122 | 123 | 128 |
| Cutting Result | Flank Wear and/or Chipping Width (µm) | | 64 | 60 | 58 | 59 | 51 | 55 | 61 |
| | Life (m) | | 0.82 | 0.89 | 0.92 | 0.91 | 1.12 | 0.95 | 0.86 |
| Notes | | | Example | Example | Example | Example | Example | Example | Example |

In each of the cutting tools produced using the composite sintered materials produced in No. III-1 to No. III-7 of Table 3, the flank face was not broken, the flank wear and/or the chipping width were small, and the life was long irrespective of whether it reach to the tool life due to wear or chipping in the high-speed processing of Inconel (registered trademark) 718, which is a heat-resistant alloy composed of an alloy including an iron group element. That is, both high wear resistance and high breakage resistance were achieved in the composite sintered material including: the diamond grains having an average grain size of less than or equal to 10 µm; the cubic boron nitride grains having an average grain size of less than or equal to 2 µm; and the remainder of the binder phase, wherein at least parts of adjacent diamond grains are bound to one another, the binder phase includes cobalt and a chemical component including at least one of a carbide, a carbonitride, a nitride, an oxide, an boride, and an oxynitride of at least one element selected from a group consisting of W, Ti, Zr, Hf, Nb, Ta, Cr, Al, Si, and Mo, the content of the diamond grains is more than or equal to 30 volume % and less than or equal to 94 volume % in the composite sintered material, the content of the cubic boron nitride grains is more than or equal to 3 volume % and less than or equal to 40 volume % in the composite sintered material, and the content of the cobalt is more than or equal to 3 volume % and less than or equal to 30 volume % in the composite sintered material, the content of the cobalt is more than or equal to 50 mass % and less than or equal to 99.5 mass % in the binder phase, and the content of the chemical component is more than or equal to 0.5 mass % and less than or equal to 50 mass % in the binder phase. The cutting tool formed using such a composite sintered material had a long life even in the high-speed processing of Inconel (registered trademark) 718, which is a heat-resistant alloy composed of an alloy including an iron group element.

The embodiments and examples disclosed herein are illustrative and non-restrictive in any respect. The scope of the present invention is defined by the terms of the claims, rather than the embodiments and examples described above, and is intended to include any modifications within the scope and meaning equivalent to the terms of the claims.

## Claims

1. A composite sintered material comprising:
a plurality of diamond grains having an average grain size of less than or equal to 10 µm;
a plurality of cubic boron nitride grains having an average grain size of less than or equal to 2 µm; and
a remainder of a binder phase, wherein
at least parts of adjacent diamond grains are bound to one another,
the binder phase includes cobalt,
in the composite sintered material, a content of the diamond grains is more than or equal to 30 volume % and less than or equal to 94 volume %, a content of the cubic boron nitride grains is more than or equal to 3 volume % and less than or equal to 40 volume %, and a content of the cobalt is more than or equal to 3 volume % and less than or equal to 30 volume %.

2. The composite sintered material according to claim 1, wherein
the average grain size of the diamond grains is less than or equal to 2 µm, and the average grain size of the cubic boron nitride grains is less than or equal to 1 µm, and
in the composite sintered material, the content of the diamond grains is more than or equal to 50 volume % and less than or equal to 70 volume %, the content of the cubic boron nitride grains is more than or equal to 10 volume % and less than or equal to 30 volume %, and the content of the cobalt is more than or equal to 10 volume % and less than or equal to 20 volume %.

3. The composite sintered material according to claim 1 or claim 2, wherein
the binder phase further includes a chemical component including at least one element selected from a group consisting of tungsten, titanium, zirconium, hafnium, niobium, tantalum, chromium, aluminum, silicon, and molybdenum, and
in the binder phase, the content of the cobalt is more than or equal to 50 mass % and less than or equal to 99.5 mass %, and a content of the chemical component is more than or equal to 0.5 mass % and less than or equal to 50 mass %.

4. The composite sintered material according to any one of claim 1 to claim 3, wherein at least a part of the chemical component included in the binder phase is at least one of a carbide, a carbonitride, a nitride, an oxide, a boride, and an oxynitride.

5. The composite sintered material according to any one of claim 1 to claim 4, wherein heat conductivity of the composite sintered material is more than or equal to 100 W·m⁻¹·K⁻¹.

6. A composite sintered material comprising:
a plurality of diamond grains having an average grain size of less than or equal to 2 µm;
a plurality of cubic boron nitride grains having an average grain size of less than or equal to 1 µm; and
a remainder of a binder phase, wherein
at least parts of adjacent diamond grains are bound to one another,
the binder phase includes cobalt and a chemical component including at least one element selected from a group consisting of tungsten, titanium, zirconium, hafnium, niobium, tantalum, chromium, aluminum, silicon, and molybdenum,
in the composite sintered material, a content of the diamond grains is more than or equal to 50 volume % and less than or equal to 70 volume %, a content of the cubic boron nitride grains is more than or equal to 10 volume % and less than or equal to 30 volume %, and a content of the cobalt is more than or equal to 10 volume % and less than or equal to 20 volume %,
in the binder phase, the content of the cobalt is more than or equal to 50 mass % and less than or equal to 99.5 mass %, and a content of the chemical component is more than or equal to 0.5 mass % and less than or equal to 50 mass %,
at least a part of the chemical component included in the binder phase is at least one of a carbide, a carbonitride, a nitride, an oxide, a boride, and an oxynitride, and
heat conductivity of the composite sintered material is more than or equal to 100 W·m⁻¹·K⁻¹.
